# EUROPÄISCHE PATENTANMELDUNG

(11) **EP 2 803 962 A1**
(43) Veröffentlichungstag der Anmeldung: **19.11.2014**
(21) Anmeldenummer: 14164932.7
(22) Anmeldetag: 16.04.2014
(51) Int. Cl.: G01J 5/08, G01J 5/02, G01J 5/06, G01J 5/34, G01J 5/00

(54) **Pyroelektrische Sensorvorrichtung, Verfahren zum Herstellen derselben und Verfahren zum pyroelektrischen Erfassen von Wärmestrahlung**

(30) Priorität: 15.05.2013 DE 102013208978
(71) Anmelder: ROBERT BOSCH GMBH, 70442 Stuttgart (DE)
(72) Erfinder: Schmidt, Claus, 71106 Magstadt (DE); Jiang, Hongquan, 70563 Stuttgart (DE)

(57) **Zusammenfassung**

Es wird eine pyroelektrische Sensorvorrichtung (100) vorgeschlagen. Die pyroelektrische Sensorvorrichtung (100) weist eine pyroelektrische Erfassungseinrichtung (110) zum Erfassen von Wärmestrahlung auf. Auch weist die pyroelektrische Sensorvorrichtung (100) eine thermoelektrische Temperiereinrichtung (120) auf. Die thermoelektrische Temperiereinrichtung (120) ist thermisch mit der pyroelektrischen Erfassungseinrichtung (110) gekoppelt. Auch ist die thermoelektrische Temperiereinrichtung (120) ansteuerbar, um eine thermische Wechselbeanspruchung der pyroelektrischen Erfassungseinrichtung (110) zu bewirken.

## Beschreibung

### Stand der Technik

Die vorliegende Erfindung bezieht sich auf eine pyroelektrische Sensorvorrichtung, auf ein Verfahren zum Herstellen einer pyroelektrischen Sensorvorrichtung, auf ein Verfahren zum pyroelektrischen Erfassen von Wärmestrahlung sowie auf ein entsprechendes Computer-Programmprodukt.

Pyroelektrische Materialien werden häufig als Sensormaterialien für Infrarotsensoren bzw. IR-Sensoren und -Kameras verwendet, beispielsweise für ein Brennebenenarray bzw. Focal Plane Array (FPA). Es bestehen jedoch einige Einschränkungen hinsichtlich des pyroelektrischen Materials. Pyroelektrische Kristalle zeigen eine spontane innere elektrische Polarisation, die an Elektroden, welche an gegenüberliegenden Seiten einer Probe des pyroelektrischen Materials angeordnet sind, als eine Spannung messbar ist. Bei konstanter Probentemperatur wird diese innere Polarisation durch bewegliche Ladungen an der Oberfläche der Probe neutralisiert; somit wird durch die Elektroden keine Spannungsdifferenz gemessen. Ändert sich die Temperatur plötzlich auf einen neuen Wert, so ändert sich die innere Polarisation, was zu einer messbaren Spannungsdifferenz führt. Somit messen herkömmliche pyroelektrische Detektoren üblicherweise kein Gleichstromsignal bzw. DC-Signal (DC, direct current; Gleichstrom). Das Sensorsignal wird zeitlich moduliert, um erfasst werden zu können.

Die US 5,075,549 A offenbart einen pyroelektrischen Detektor, bei dem elektronisches Chopping eingesetzt wird. Die Polarisation des pyroelektrischen Kristalls wird durch ein elektrisches Wechselfeld moduliert.

### Offenbarung der Erfindung

Vor diesem Hintergrund werden eine verbesserte pyroelektrische Sensorvorrichtung, ein verbessertes Verfahren zum Herstellen einer pyroelektrischen Sensorvorrichtung, ein verbessertes Verfahren zum pyroelektrischen Erfassen von Wärmestrahlung und ein verbessertes Computer-Programmprodukt gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der vorliegenden Erfindung kann für die Erfassung von Wärmestrahlung ein pyroelektrischer Sensor ohne Chopper bzw. eine pyroelektrische Infrarotkamera ohne Chopper bereitgestellt werden, wobei insbesondere eine mechanische Wandlereinrichtung bzw. Modulationseinrichtung, auch als ein mechanischer Chopper bekannt, vermieden bzw. eliminiert werden kann. Es ist eine Temperaturmodulation ohne Chopper für einen pyroelektrischen Detektor vorgesehen, um auch ein Gleichstromsignal bzw. DC-Signal messen zu können. Die Temperaturmodulation des pyroelektrischen Detektors wird durch ein Kühl-/Heizelement auf der Basis des thermoelektrischen Effekts, z. B. Peltier-Effekt oder Seebeck-Effekt, realisiert.

Vorteilhafterweise ermöglichen Ausführungsformen der vorliegenden Erfindung, einen pyroelektrischen Sensor ohne Chopper für eine Vielfalt von Anwendungen und auch zur Erfassung stationärer Szenen bereitzustellen. Aufgrund der Vermeidung von Chopping bzw. eines Choppers, insbesondere eines mechanischen Choppers, kann eine Anzahl beweglicher Teile reduziert werden und somit eine kompaktere Bauweise des Sensors erreicht werden sowie Kosten eingespart werden. Es können aufgrund der Eigenschaften pyroelektrischer Materialien in Kombination mit der Choppervermeidung somit vielseitig einsetzbare Detektoren geschaffen werden, die eine hohe Empfindlichkeit für ein breites Spektrum vom sichtbaren Bereich bis zum Terahertzbereich und eine hohe Effizienz aufweisen. Ein solcher pyroelektrischer Sensor ohne Chopper bzw. eine pyroelektrische Infrarotkamera ohne Chopper kann aufgrund überlegener Eigenschaften unter anderem bei Anwendungen aus den Bereichen Fahrerassistenz, Nachtsicht, Überwachung, Gebäudesicherheit und Personenzählung eingesetzt werden.

So kann beispielsweise bei Gassensoren und Spektroskopen, bei denen eine definierte Probenkammer existiert, auf eine zeitlich modulierte Lichtquelle verzichtet werden. Bei Anwendungen wie Personenzählung und Gestenerkennung, bei denen keine definierte Lichtquelle in aussagekräftiger Weise verfügbar ist, kann sowohl eine Bewegung von Objekten, und somit eine Temperaturänderung, als auch eine statische Szene erfasst werden. So kann auch auf zusätzliche Softwarealgorithmen zur Kompensation der fehlenden Information verzichtet werden. Bei IR-Kameraanwendungen ist somit beispielsweise keine mechanische Wandlereinrichtung bzw. Modulationseinrichtung, auch als ein mechanischer Chopper bekannt, mehr einzusetzen, um das einfallende Licht zu modulieren. Ferner brauchen keine mechanische Schwingungen mehr eingesetzt werden.

Eine pyroelektrische Sensorvorrichtung weist folgende Merkmale auf:
eine pyroelektrische Erfassungseinrichtung zum Erfassen von Wärmestrahlung; und
eine thermoelektrische Temperiereinrichtung, die thermisch mit der pyroelektrischen Erfassungseinrichtung gekoppelt ist und ansteuerbar ist, um eine thermische Wechselbeanspruchung der pyroelektrischen Erfassungseinrichtung zu bewirken.

Die pyroelektrische Erfassungseinrichtung kann zumindest ein pyroelektrisches Sensorelement aufweisen. Ein pyroelektrisches Sensorelement kann hierbei ein pyroelektrisches Material, wie beispielsweise Blei-Zirkonat-Titanat (PZT) oder Lithiumtantal-Kristall, und zwei Elektroden aufweisen, zwischen denen das pyroelektrische Material angeordnet ist.

Insbesondere kann die thermoelektrische Temperiereinrichtung ansteuerbar sein, um zum Bewirken der thermischen Wechselbeanspruchung die pyroelektrische Erfassungseinrichtung wiederholt zu kühlen. Dabei kann die thermoelektrische Temperiereinrichtung mittels eines Ansteuersignals ansteuerbar sein, um die pyroelektrische Erfassungseinrichtung zum Bewirken der thermischen Wechselbeanspruchung in einem einstellbaren bzw. modulierbaren Zyklus zu kühlen. Dabei können sich eine erste Zyklusphase mit aktiviertem Kühlbetrieb und eine zweite Zyklusphase mit deaktiviertem Kühlbetrieb der thermoelektrischen Temperiereinrichtung abwechseln. Eine solche Ausführungsform bietet den Vorteil, dass zusätzlich zur Temperaturmodulation auch eine Wärmeabfuhr von der pyroelektrischen Erfassungseinrichtung realisiert werden kann.

Alternativ kann die thermoelektrische Temperiereinrichtung ansteuerbar sein, um zum Bewirken der thermischen Wechselbeanspruchung die pyroelektrische Erfassungseinrichtung wiederholt zu erwärmen.

Gemäß einer Ausführungsform kann die thermoelektrische Temperiereinrichtung zumindest ein Peltierelement oder zumindest eine Dünnfilmschicht aus thermoelektrischem Material aufweisen. Die thermoelektrische Temperiereinrichtung kann hierbei direkt oder indirekt thermisch mit der pyroelektrischen Erfassungseinrichtung thermisch und/oder mechanisch gekoppelt sein. Eine solche Ausführungsform bietet den Vorteil, dass die thermoelektrische Temperiereinrichtung und somit die Temperaturmodulation auf besonders einfache Weise realisiert werden kann bzw. die thermoelektrische Temperiereinrichtung besonders einfach mit der pyroelektrischen Erfassungseinrichtung thermisch koppelbar ist.

Auch kann ein Wärmeleitsubstrat zwischen der pyroelektrischen Erfassungseinrichtung und der thermoelektrischen Temperiereinrichtung angeordnet sein. Dabei können die pyroelektrische Erfassungseinrichtung und die thermoelektrische Temperiereinrichtung mittels des Wärmeleitsubstrats thermisch miteinander gekoppelt sein. Bei dem Wärmeleitsubstrat handelt es sich um ein Substrat aus einem wärmeleitfähigen Material. Insbesondere kann das Wärmeleitsubstrat eine Halbleitermembran, beispielsweise eine Siliziummembran aufweisen. Eine solche Ausführungsform bietet den Vorteil, dass zur Realisierung der Temperaturmodulation eine gleichmäßige Wärmeübertragung zwischen der pyroelektrischen Erfassungseinrichtung und der thermoelektrischen Temperiereinrichtung ermöglicht wird.

Gemäß einer Ausführungsform kann die pyroelektrische Erfassungseinrichtung eine Mehrzahl von pyroelektrischen Sensorelementen aufweisen, die mittels eines gemeinsamen Wärmeleitsubstrats thermisch mit der thermoelektrischen Temperiereinrichtung gekoppelt sind. Bei dem Wärmeleitsubstrat handelt es sich um ein Substrat aus einem wärmeleitfähigen Material. Insbesondere kann das Wärmeleitsubstrat eine Halbleitermembran, beispielsweise eine Siliziummembran aufweisen. Eine solche Ausführungsform bietet den Vorteil, dass zur Realisierung der Temperaturmodulation eine gleichmäßige Wärmeübertragung zwischen der thermoelektrischen Temperiereinrichtung und der Mehrzahl von pyroelektrischen Sensorelementen ermöglicht wird. Somit kann auch eine Mehrzahl von pyroelektrischen Sensorelementen mittels der thermoelektrischen Temperiereinrichtung einer thermischen Wechselbeanspruchung bzw. Temperaturmodulation unterzogen werden.

Ferner kann eine erste elektrische Schaltung zum Auslesen zumindest eines die Wärmestrahlung repräsentierenden Sensorsignals von der pyroelektrischen Erfassungseinrichtung vorgesehen sein. Dabei kann die erste elektrische Schaltung ausgebildet sein, um das zumindest eine Sensorsignal weiterzuleiten, weiterzuverarbeiten und/oder unter Verwendung des zumindest einen Sensorsignals die Wärmestrahlung zu bestimmen. Somit kann eine Bestimmung der Wärmestrahlung unter Verwendung der ersten elektrischen Schaltung vorteilhaft ermöglicht bzw. realisiert werden.

Zudem kann eine zweite elektrische Schaltung zum Ansteuern der thermoelektrischen Temperiereinrichtung vorgesehen sein, um die thermische Wechselbeanspruchung der pyroelektrischen Erfassungseinrichtung zu bewirken. Dabei kann die zweite elektrische Schaltung ausgebildet sein, um an die thermoelektrische Temperiereinrichtung ein Ansteuersignal auszugeben, das geeignet ist, um mittels der thermoelektrischen Temperiereinrichtung die thermische Wechselbeanspruchung der pyroelektrischen Erfassungseinrichtung zu bewirken. Somit kann die thermische Wechselbeanspruchung bzw. Temperaturmodulation mittels der zweiten elektrischen Schaltung vorteilhaft ermöglicht bzw. realisiert werden.

Ein Verfahren zum Herstellen einer pyroelektrischen Sensorvorrichtung weist folgende Schritte auf:
Bereitstellen einer pyroelektrischen Erfassungseinrichtung zum Erfassen von Wärmestrahlung und einer thermoelektrischen Temperiereinrichtung; und
Anordnen der pyroelektrischen Erfassungseinrichtung und der thermoelektrischen Temperiereinrichtung in thermischer Kopplung miteinander, wobei die thermoelektrische Temperiereinrichtung ansteuerbar ist, um eine thermische Wechselbeanspruchung der pyroelektrischen Erfassungseinrichtung zu bewirken.

Das Verfahren zum Herstellen kann vorteilhaft ausgeführt werden, um eine Ausführungsform der vorstehend genannten pyroelektrischen Sensorvorrichtung herzustellen.

Ein Verfahren zum pyroelektrischen Erfassen von Wärmestrahlung weist folgende Schritte auf:
Ansteuern einer thermisch mit einer pyroelektrischen Erfassungseinrichtung gekoppelten thermoelektrischen Temperiereinrichtung, um eine thermische Wechselbeanspruchung der pyroelektrischen Erfassungseinrichtung zu bewirken; und
Auslesen zumindest eines die Wärmestrahlung repräsentierenden Sensorsignals von der pyroelektrischen Erfassungseinrichtung.

Das Verfahren zum pyroelektrischen Erfassen kann in Verbindung mit einer Ausführungsform der vorstehend genannten pyroelektrischen Sensorvorrichtung vorteilhaft ausgeführt werden, um Wärmestrahlung zu erfassen.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines oben genannten Verfahrens zum pyroelektrischen Erfassen von Wärmestrahlung verwendet wird, wenn das Programm auf einem Computer oder einer Vorrichtung ausgeführt wird.

Eine solche Vorrichtung kann Teil eines Steuergerätes oder dergleichen sein. Die Vorrichtung kann ausgebildet sein, um die Schritte eines oben genannten Verfahrens zum Erfassen durchzuführen bzw. umzusetzen. Insbesondere kann die Vorrichtung Einrichtungen aufweisen, die ausgebildet sind, um je einen Schritt eines oben genannten Verfahrens auszuführen. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die Erfindung wird anhand der beigefügten Zeichnungen beispielhaft näher erläutert. Es zeigen:
- Fig. 1: eine schematische Darstellung einer pyroelektrischen Sensorvorrichtung gemäß einem Ausführungsbeispiel der vorliegenden Erfindung;
- Fig. 2: eine schematische Schnittdarstellung einer pyroelektrischen Sensorvorrichtung gemäß einem Ausführungsbeispiel der vorliegenden Erfindung;
- Fig. 3: eine schematische Darstellung einer pyroelektrischen Sensorvorrichtung gemäß einem Ausführungsbeispiel der vorliegenden Erfindung;
- Fig. 4: ein Ablaufdiagramm eines Verfahrens zum Herstellen gemäß einem Ausführungsbeispiel der vorliegenden Erfindung; und
- Fig. 5: ein Ablaufdiagramm eines Verfahrens zum pyroelektrischen Erfassen gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

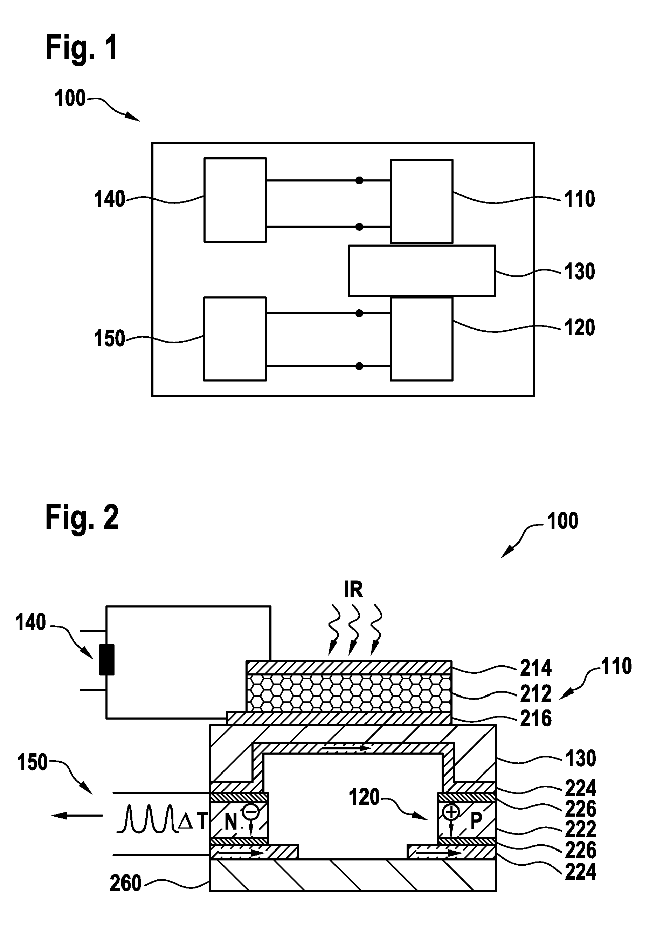

Fig. 1 zeigt eine schematische Darstellung einer pyroelektrischen Sensorvorrichtung 100 gemäß einem Ausführungsbeispiel der vorliegenden Erfindung. Die pyroelektrische Sensorvorrichtung 100 weist eine pyroelektrische Erfassungseinrichtung 110 zum Erfassen von Wärmestrahlung und eine thermoelektrische Temperiereinrichtung 120 auf. Die thermoelektrische Temperiereinrichtung 120 ist thermisch mit der pyroelektrischen Erfassungseinrichtung 110 gekoppelt. Auch ist die thermoelektrische Temperiereinrichtung 120 ansteuerbar, um eine thermische Wechselbeanspruchung der pyroelektrischen Erfassungseinrichtung 110 zu bewirken.

Gemäß einem Ausführungsbeispiel ist die thermoelektrische Temperiereinrichtung 120 ansteuerbar, um zum Bewirken der thermischen Wechselbeanspruchung die pyroelektrische Erfassungseinrichtung 110 wiederholt zu kühlen. Gemäß einem alternativen Ausführungsbeispiel kann die thermoelektrische Temperiereinrichtung ansteuerbar sein, um zum Bewirken der thermischen Wechselbeanspruchung die pyroelektrische Erfassungseinrichtung wiederholt zu erwärmen. Gemäß einem Ausführungsbeispiel weist die thermoelektrische Temperiereinrichtung 120 zumindest ein Peltierelement oder zumindest eine Dünnfilmschicht aus thermoelektrischem Material auf.

Gemäß einem Ausführungsbeispiel ist ein Wärmeleitsubstrat 130 zwischen der pyroelektrischen Erfassungseinrichtung 110 und der thermoelektrischen Temperiereinrichtung 120 angeordnet. Dabei sind die pyroelektrische Erfassungseinrichtung 110 und die thermoelektrische Temperiereinrichtung 120 mittels des Wärmeleitsubstrats 130 thermisch miteinander gekoppelt. Gemäß einem Ausführungsbeispiel ist das Wärmeleitsubstrat 130 eine Halbleitermembran, beispielsweise eine Siliziummembran aufweisen.

Gemäß einem Ausführungsbeispiel weist die pyroelektrische Erfassungseinrichtung 110 eine Mehrzahl von pyroelektrischen Sensorelementen auf, die mittels eines gemeinsamen Wärmeleitsubstrats 130 thermisch mit der thermoelektrischen Temperiereinrichtung 120 gekoppelt sind.

Gemäß einem Ausführungsbeispiel weist die Sensorvorrichtung 100 eine erste elektrische Schaltung 140 zum Auslesen zumindest eines die Wärmestrahlung repräsentierenden Sensorsignals von der pyroelektrischen Erfassungseinrichtung 110 auf. Die erste elektrische Schaltung 140 ist mittels elektrischer Leitungen mit Anschlüssen der pyroelektrischen Erfassungseinrichtung 110 verbunden.

Gemäß einem Ausführungsbeispiel weist die Sensorvorrichtung 100 eine zweite elektrische Schaltung 150 zum Ansteuern der thermoelektrischen Temperiereinrichtung 120 auf, um die thermische Wechselbeanspruchung der pyroelektrischen Erfassungseinrichtung 110 zu bewirken. Die zweite elektrische Schaltung 150 ist mittels elektrischer Leitungen mit Anschlüssen der thermoelektrischen Temperiereinrichtung 120 verbunden.

Fig. 2 zeigt eine schematische Schnittdarstellung einer pyroelektrischen Sensorvorrichtung 100 gemäß einem Ausführungsbeispiel der vorliegenden Erfindung. Die in Fig. 2 dargestellte pyroelektrische Sensorvorrichtung 100 entspricht oder ähnelt der in Fig. 1 gezeigten pyroelektrischen Sensorvorrichtung. Die Darstellung in Fig. 2 zeigt die pyroelektrische Sensorvorrichtung 100 detaillierter als Fig. 1 und in einer Schnittdarstellung.

Gezeigt sind die pyroelektrische Sensorvorrichtung 100, die pyroelektrische Erfassungseinrichtung 110, die thermoelektrische Temperiereinrichtung 120, das Wärmeleitsubstrat 130 bzw. eine Si-Membran, die erste elektrische Schaltung 140, ein Richtungspfeil als Hinweis auf die zweite elektrische Schaltung 150, ein pyroelektrischer Kristall 212 bzw. pyroelektrisches Material, eine erste Elektrode 214, eine zweite Elektrode 216, thermoelektrischen Material 222, zwei TED-Elektroden 224 (TED, thermoelectric device bzw. thermoelektrische Einrichtung) der thermoelektrischen Temperiereinrichtung 120, zwei Kontaktschichten 226, ein Trägersubstrat 260 und Wärmestrahlung bzw. Infrarotstrahlung IR. Ferner sind beispielhaft ein Bereich überwiegend negativer elektrischer Ladung N sowie ein Bereich überwiegend positiver elektrischer Ladung P in dem thermoelektrischen Material 222 eingezeichnet. Auch ist mittels Richtungspfeilen symbolisch ein Fluss elektrischen Stroms in den TED-Elektroden 224 gezeigt. Zudem ist eine symbolische Temperaturmodulation bzw. thermische Wechselbeanspruchung ΔT in Gestalt eines symbolischen Signalverlaufs eines Ansteuersignals von der in Fig. 2 nicht explizit gezeigten zweiten Schaltung 150 zum Ansteuern der thermoelektrischen Temperiereinrichtung 120 dargestellt.

Die pyroelektrische Erfassungseinrichtung 110 weist den pyroelektrischen Kristall 212 auf, der zwischen der ersten Elektrode 214 und der zweiten Elektrode 216 angeordnet ist. Beispielhaft ist gemäß diesem Ausführungsbeispiel die erste Elektrode 214 der einfallenden Wärmestrahlung IR zugewandt angeordnet und ist die zweite Elektrode 216 von der einfallenden Wärmestrahlung IR abgewandt angeordnet. Die erste Elektrode 214 und die zweite Elektrode 216 der pyroelektrischen Erfassungseinrichtung 110 sind elektrisch mit der ersten elektrischen Schaltung 140 verbunden. Die erste elektrische Schaltung 140 ist zum Auslesen zumindest eines Sensorsignals von der pyroelektrischen Erfassungseinrichtung 110 ausgebildet. Insbesondere ist die erste elektrische Schaltung 140 zum Messen des Wärmestrahlungssignals bzw. IR-Signals ausgebildet. Für ein Videosignal sind zum Beispiel typischerweise 30 bis 60 Frames bzw. Rahmen pro Sekunde erforderlich.

Für die pyroelektrische Erfassungseinrichtung 110 denkbar ist beispielsweise eine Verwendung eines handelsüblichen pyroelektrischen Detektors oder Detektorarrays, z. B. PZT-basiert bzw. auf Basis von Blei-Zirkonat-Titanat. Ein solcher pyroelektrischer Detektor ist gemäß einem Ausführungsbeispiel mittels eines Halbleiterprozesses oder MEMS-Prozesses (MEMS, micro-electro-mechanical system; Mikrosystem) gebildet, um eine Siliziummembran aufzubauen. Eine solche Siliziummembran kann gemäß einem Ausführungsbeispiel als das Wärmeleitsubstrat 130 fungieren. Das Wärmeleitsubstrat 130 ist zwischen der pyroelektrischen Erfassungseinrichtung 110 und der thermoelektrischen Temperiereinrichtung 120 angeordnet. Hierbei ist beispielhaft die zweite Elektrode 216 der pyroelektrischen Erfassungseinrichtung 110 mit dem Wärmeleitsubstrat 130 verbunden.

Die thermoelektrische Temperiereinrichtung 120 weist das thermoelektrische Material 222, die TED-Elektroden 224 und die Kontaktschichten 226 auf. Eine erste der TED-Elektroden 224 ist mit dem Wärmeleitsubstrat 130 verbunden. Eine zweite der TED-Elektroden 224 ist mit dem Trägersubstrat 260 verbunden. Die thermoelektrische Temperiereinrichtung 120 ist zwischen dem Wärmeleitsubstrat 130 und dem Trägersubstrat 260 angeordnet. Das thermoelektrische Material 222 ist zwischen den TED-Elektroden 224 angeordnet. Hierbei sind zwischen dem thermoelektrischen Material 223 und den TED-Elektroden 224 die Kontaktschichten 226 angeordnet.

Bei der thermoelektrischen Temperiereinrichtung 120 handelt es sich gemäß einem Ausführungsbeispiel um eine handelsübliche thermoelektrische Einrichtung (TED) z. B. auf der Basis von Materialien wie Bi₂Te₃, Bi₂Se₃, PbTe oder dergleichen.

Die thermoelektrische Temperiereinrichtung 120 ist somit an einer von der einfallenden Wärmestrahlung IR abgewandten Seite der pyroelektrischen Erfassungseinrichtung 110 bzw. des pyroelektrischen Detektors angebracht. Die Anbringung der thermoelektrischen Temperiereinrichtung 120 an der pyroelektrischen Erfassungseinrichtung 110 erfolgt beispielsweise durch Löten, Wafer-Bonden, Chip-Bonden, thermische Kompression, Kleben oder andere Verbindungstechniken. Die thermoelektrische Temperiereinrichtung 120 fungiert bei der Sensorvorrichtung 100 als ein Kühlelement und/oder Heizelement.

Gemäß einem Ausführungsbeispiel ist die thermoelektrische Temperiereinrichtung 120 in Dünnfilmtechnik aufgebaut. Hierbei sind thermoelektrische Schichten durch einen Sputter-Prozess, CVD-Prozess oder jedoch unter Verwendung einer diskreten Komponente wie einem Peltier-Element aufgebaut. Unter Verwendung eines Dünnfilmprozesses können die thermoelektrischen Schichten direkt auf die pyroelektrische Erfassungseinrichtung 110 oder das Wärmeleitsubstrat 130 aufgebracht werden. Gemäß einem Ausführungsbeispiel sind mehrere Schichten aus thermoelektrischem Material, beispielsweise in Gestalt von Bumps, auf das Wärmeleitsubstrat 130 bzw. die Siliziummembran aufgebracht, um eine Wärmepumpleistung zu verbessern.

Die zweite elektrische Schaltung 150, die in Fig. 2 nicht explizit gezeigt ist, ist elektrisch mit der thermoelektrischen Temperiereinrichtung 120 verbunden. Die zweite elektrische Schaltung 150 ist zum Ansteuern der thermoelektrischen Temperiereinrichtung 120 ausgebildet, um die Temperatur der pyroelektrischen Erfassungseinrichtung 110 zu modulieren bzw. die Temperaturmodulation ΔT mittels eines Ansteuersignals zu bewirken. Gemäß einem Ausführungsbeispiel liegt eine Temperaturzyklusdauer der Modulation typischerweise im Millisekundenbereich.

Der pyroelektrische Kristall 212 wird gemäß dem in Fig. 2 gezeigten Ausführungsbeispiel über das Wärmeleitsubstrat 130 bzw. die Siliziummembran periodisch durch die thermoelektrische Temperiereinrichtung 120 gekühlt. Insbesondere werden dabei das Wärmeleitsubstrat 130 sowie die pyroelektrische Erfassungseinrichtung 110 gekühlt und das Trägersubstrat 260 erwärmt. Die Temperaturmodulation ΔT ermöglicht, dass die pyroelektrische Erfassungseinrichtung 110 eine sich nicht ändernde Szene abbilden kann. Ermöglicht wird dies durch eine Kombination der pyroelektrischen Erfassungseinrichtung 110 mit der thermoelektrischen Temperiereinrichtung 120, insbesondere einem thermoelektrischen Kühler, um eine Gleichsignalerfassung bzw. DC-Signalerfassung ohne Chopper zu erreichen.

Gemäß einem alternativen Ausführungsbeispiel kann der pyroelektrische Kristall 212 über das Wärmeleitsubstrat 130 bzw. die Siliziummembran periodisch durch die thermoelektrische Temperiereinrichtung 120 erwärmt werden.

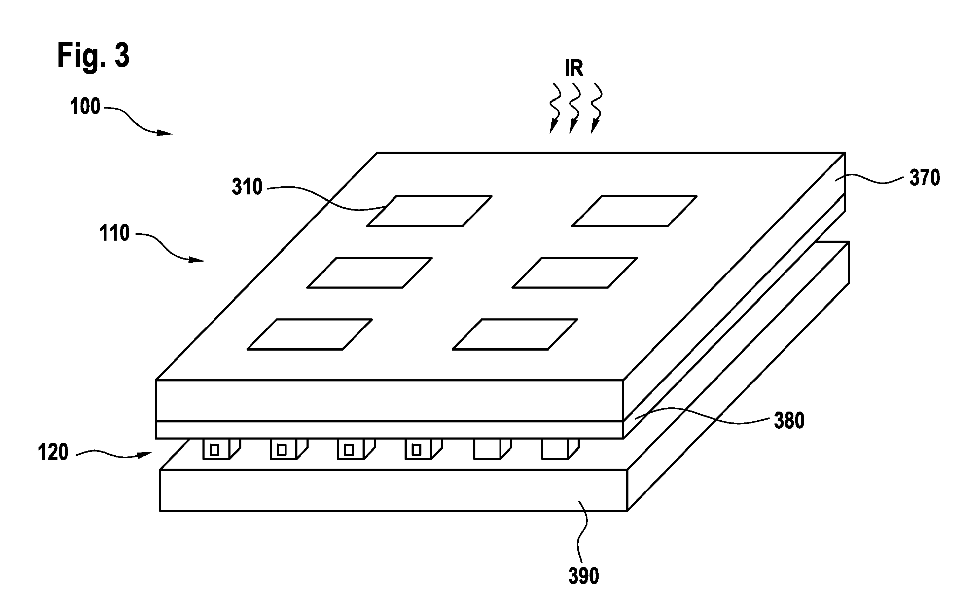

Fig. 3 zeigt eine schematische Darstellung einer pyroelektrischen Sensorvorrichtung gemäß einem Ausführungsbeispiel der vorliegenden Erfindung. Die in Fig. 3 dargestellte pyroelektrische Sensorvorrichtung 100 umfasst eine Mehrzahl der in Fig. 1 bzw. Fig. 2 gezeigten pyroelektrischen Sensorvorrichtungen. Gezeigt sind die pyroelektrische Erfassungseinrichtung 110, die thermoelektrische Temperiereinrichtung 120, eine Mehrzahl von beispielhaft sechs pyroelektrischen Sensorelementen 310, ein Halbleiterchip 370 eine gekühlte Schicht 380 und eine erwärmte Schicht 390.

Die pyroelektrische Erfassungseinrichtung 110 weist die Mehrzahl von pyroelektrischen Sensorelementen 310 auf. Die pyroelektrischen Sensorelemente 310 weisen pyroelektrischen Kristall auf einer Siliziummembran auf. Die Mehrzahl von pyroelektrischen Sensorelementen 310 bildet ein pyroelektrisches Detektorarray auf dem Halbleiterchip 370. Die pyroelektrische Erfassungseinrichtung 110 bzw. das pyroelektrische Detektorarray ist thermisch mit der gekühlten Schicht 380 gekoppelt. Die gekühlte Schicht 380 weist beispielsweise das Wärmeleitsubstrat und/oder eine der TED-Elektroden der thermoelektrischen Temperiereinrichtung 120 auf.

Die thermoelektrische Temperiereinrichtung 120 weist eine Mehrzahl von Bereichen mit thermoelektrischem Material bzw. eine Mehrzahl von Peltier-Elementen auf. Das thermoelektrische Material der thermoelektrischen Temperiereinrichtung 120 ist zwischen der gekühlten Schicht 380 und der erwärmten Schicht 390 angeordnet. Die erwärmte Schicht 390 weist beispielsweise eine der TED-Elektroden der thermoelektrischen Temperiereinrichtung 120 und/oder das Trägersubstrat auf.

Mittels der thermoelektrischen Temperiereinrichtung 120 mit Peltier-Elementen wird gemäß diesem Ausführungsbeispiel somit eine wiederholte bzw. intermittierende Kühlung der pyroelektrischen Erfassungseinrichtung 110 bzw. des pyroelektrischen Detektorarrays bewirkt. Somit ist die Kühlung der pyroelektrischen Erfassungseinrichtung 110 mittels der thermoelektrischen Temperiereinrichtung 120 nicht nur auf Zellenebene bzw. der Ebene eines einzelnen pyroelektrischen Sensorelements 310, sondern auf Chipebene bzw. auf der Ebene der Mehrzahl von pyroelektrischen Sensorelementen 310, also des pyroelektrischen Detektorarrays realisiert.

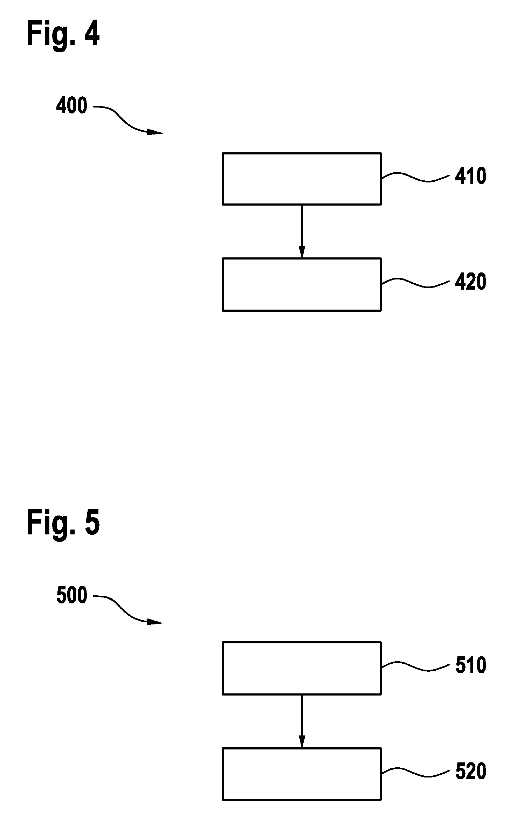

Fig. 4 zeigt ein Ablaufdiagramm eines Verfahrens 400 zum Herstellen einer pyroelektrischen Sensorvorrichtung, gemäß einem Ausführungsbeispiel der vorliegenden Erfindung. Das Verfahren 400 kann vorteilhaft ausgeführt werden, um die pyroelektrische Sensorvorrichtung aus Fig. 1, Fig. 2 bzw. Fig. 3 herzustellen. Das Verfahren 400 weist einen Schritt 410 des Bereitstellens einer pyroelektrischen Erfassungseinrichtung zum Erfassen von Wärmestrahlung und einer thermoelektrischen Temperiereinrichtung auf. Auch weist das Verfahren 400 einen Schritt 420 des Anordnens der pyroelektrischen Erfassungseinrichtung und der thermoelektrischen Temperiereinrichtung in thermischer Kopplung miteinander auf. Dabei ist die thermoelektrische Temperiereinrichtung ansteuerbar, um eine thermische Wechselbeanspruchung der pyroelektrischen Erfassungseinrichtung zu bewirken.

Fig. 5 zeigt ein Ablaufdiagramm eines Verfahrens 500 zum pyroelektrischen Erfassen von Wärmestrahlung, gemäß einem Ausführungsbeispiel der vorliegenden Erfindung. Das Verfahren 500 ist in Verbindung mit einer pyroelektrischen Sensorvorrichtung ausführbar. Das Verfahren 500 kann in Verbindung mit der pyroelektrischen Sensorvorrichtung aus Fig. 1, Fig. 2 bzw. Fig. 3 vorteilhaft ausgeführt werden. Das Verfahren 500 weist einen Schritt 510 des Ansteuerns einer thermisch mit einer pyroelektrischen Erfassungseinrichtung gekoppelten thermoelektrischen Temperiereinrichtung auf, um eine thermische Wechselbeanspruchung der pyroelektrischen Erfassungseinrichtung zu bewirken. Auch weist das Verfahren 500 einen Schritt 520 des Auslesens zumindest eines die Wärmestrahlung repräsentierenden Sensorsignals von der pyroelektrischen Erfassungseinrichtung auf.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können Verfahrensschritte wiederholt sowie in einer anderen als in der beschriebenen Reihenfolge ausgeführt werden.

## Patentansprüche

1. Pyroelektrische Sensorvorrichtung (100) mit folgenden Merkmalen:
einer pyroelektrischen Erfassungseinrichtung (110) zum Erfassen von Wärmestrahlung (IR); und
einer thermoelektrischen Temperiereinrichtung (120), die thermisch mit der pyroelektrischen Erfassungseinrichtung (110) gekoppelt ist und ansteuerbar ist, um eine thermische Wechselbeanspruchung (ΔT) der pyroelektrischen Erfassungseinrichtung (110) zu bewirken.

2. Sensorvorrichtung (100) gemäß Anspruch 1, bei der die thermoelektrische Temperiereinrichtung (120) ansteuerbar ist, um zum Bewirken der thermischen Wechselbeanspruchung (ΔT) die pyroelektrische Erfassungseinrichtung (110) wiederholt zu kühlen.

3. Sensorvorrichtung (100) gemäß einem der vorangegangenen Ansprüche, bei der die thermoelektrische Temperiereinrichtung (120) zumindest ein Peltierelement oder zumindest eine Dünnfilmschicht aus thermoelektrischem Material (222) aufweist.

4. Sensorvorrichtung (100) gemäß einem der vorangegangenen Ansprüche, bei der ein Wärmeleitsubstrat (130) zwischen der pyroelektrischen Erfassungseinrichtung (110) und der thermoelektrischen Temperiereinrichtung (120) angeordnet ist, wobei die pyroelektrische Erfassungseinrichtung (110) und die thermoelektrische Temperiereinrichtung (120) mittels des Wärmeleitsubstrats (130) thermisch miteinander gekoppelt sind.

5. Sensorvorrichtung (100) gemäß einem der vorangegangenen Ansprüche, bei der die pyroelektrische Erfassungseinrichtung (110) eine Mehrzahl von pyroelektrischen Sensorelementen (310) aufweist, die mittels eines gemeinsamen Wärmeleitsubstrats (130) thermisch mit der thermoelektrischen Temperiereinrichtung (120) gekoppelt sind.

6. Sensorvorrichtung (100) gemäß einem der vorangegangenen Ansprüche, bei der eine erste elektrische Schaltung (140) zum Auslesen zumindest eines die Wärmestrahlung (IR) repräsentierenden Sensorsignals von der pyroelektrischen Erfassungseinrichtung (110) vorgesehen ist.

7. Sensorvorrichtung (100) gemäß einem der vorangegangenen Ansprüche, bei der eine zweite elektrische Schaltung (150) zum Ansteuern der thermoelektrischen Temperiereinrichtung (120) vorgesehen ist, um die thermische Wechselbeanspruchung (ΔT) der pyroelektrischen Erfassungseinrichtung (110) zu bewirken.

8. Verfahren (400) zum Herstellen einer pyroelektrischen Sensorvorrichtung (100), wobei das Verfahren (400) folgende Schritte aufweist:
Bereitstellen (410) einer pyroelektrischen Erfassungseinrichtung (110) zum Erfassen von Wärmestrahlung (IR) und einer thermoelektrischen Temperiereinrichtung (120); und
Anordnen (420) der pyroelektrischen Erfassungseinrichtung (110) und der thermoelektrischen Temperiereinrichtung (120) in thermischer Kopplung miteinander, wobei die thermoelektrische Temperiereinrichtung (120) ansteuerbar ist, um eine thermische Wechselbeanspruchung (ΔT) der pyroelektrischen Erfassungseinrichtung (110) zu bewirken.

9. Verfahren (500) zum pyroelektrischen Erfassen von Wärmestrahlung (IR), wobei das Verfahren (500) folgende Schritte aufweist:
Ansteuern (510) einer thermisch mit einer pyroelektrischen Erfassungseinrichtung (110) gekoppelten thermoelektrischen Temperiereinrichtung (120), um eine thermische Wechselbeanspruchung (ΔT) der pyroelektrischen Erfassungseinrichtung (110) zu bewirken; und Auslesen (520) zumindest eines die Wärmestrahlung (IR) repräsentierenden Sensorsignals von der pyroelektrischen Erfassungseinrichtung (110).

10. Computer-Programmprodukt mit Programmcode zur Durchführung eines Verfahrens (500) gemäß Anspruch 9, wenn das Programm auf einer Vorrichtung ausgeführt wird.
